# EUROPÄISCHE PATENTANMELDUNG

(11) **EP 0 733 878 A2**
(43) Veröffentlichungstag der Anmeldung: **25.09.1996**
(21) Anmeldenummer: 96103708.2
(22) Anmeldetag: 09.03.1996
(51) Int. Cl.: G01B 11/04

(54) **Vorrichtung zum Messen von Papierbögen**

(30) Priorität: 24.03.1995 DE 19510753
(71) Anmelder: E.C.H. WILL GmbH, D-22529 Hamburg (DE)
(72) Erfinder: Szczepaniak, Wolfram, 21435 Ashausen (DE); Rann, Harald, 22417 Hamburg (DE); Hörnicke, Frank, 30900 Wedemark (DE)
(74) Vertreter: Hiss, Ludwig, Pat. Ass. Dipl.-Ing.

(57) **Zusammenfassung**

Es wird eine Vorrichtung zum Bestimmen ausgewählter Qualitätsmerkmale wie der Länge, der Breite und/oder der Schnittkantenrauhigkeit von Bögen aus Papier oder ähnlichem Material beschrieben. Diese Vorrichtung besteht aus einer Prüfeinrichtung (1), welche Meßmittel (22,26) zum Erfassen der ausgewählten Eigenschaften wenigstens jeweils eines Bogens (9) und eine im Erfassungsbereich der Meßmittel liegende Meßstation (19) zum Aufnehmen wenigstens eines zu prüfenden Bogens aufweist. Eine Zuführeinrichtung (3) ist zum selbsttätigen Zuführen und Positionieren der Bögen in der Meßstation (19) vorgesehen. Mit einer Abwurfeinrichtung (6) werden die Bögen nach dem Meßvorgang aus der Meßstation (19) abgeworfen.

Diese Vorrichtung bietet den Vorteil einer automatischen Prüfung von Qualitätsmerkmalen von geschnittenen Formatpapieren, ohne daß subjektive Bewertungseinflüsse die Prüfergebnisse verfälschen.

## Beschreibung

Die Erfindung betrifft eine Vorrichtung zum Bestimmen ausgewählter Qualitätsmerkmale, insbesondere der Länge, Breite und/oder der Schnittkantenrauhigkeit, von Bögen aus Papier oder ähnlichem Material.

Papierbögen, insbesondere Formatpapiere, werden gewöhnlich in Formatschneidern von von Vorratsrollen ablaufenden ein- oder mehrlagigen Papierbahnen abgetrennt. Dazu wird die laufende Papierbahn mit rotierenden Kreismessern zunächst in mehrere parallele Teilbahnen zerschnitten, deren Breite der Länge einer der Seiten der Bögen gleich ist. Von den Teilbahnen werden mit umlaufenden Querschneidern die Bögen abgetrennt.

Wichtige Qualitätsmerkmale der so hergestellten Bögen sind ihre Länge und Breite sowie die Rauhigkeit der Schnittkanten. Die Länge und Breite der Bögen geben Aufschluß über die Einstellungen der Messer im Formatschneider, die Schnittkantenrauhigkeit läßt u.a. auf den Zustand der Messer schließen. Es ist daher notwendig, diese Qualitätsmerkmale wenigstens von Zeit zu Zeit zu erfassen, um ggf. korrigierend in den Produktionsprozeß eingreifen zu können.

Um die genannten und ggf. weitere Qualitätsmerkmale der geschnittenen Formatpapiere zu bestimmen, sind derzeit stichprobenartige Messungen üblich, die manuell mit einfachen Hilfsmitteln durchgeführt werden. Für die Längen- und Breitenmessung der Bögen werden spezielle Meßbretter als Meßlehren eingesetzt, an denen Abweichungen von den Sollmaßen abgelesen werden. Die Rauheit der Schnittkanten wird durch Augenschein mit standardisierten Vorgaben verglichen und in fünf oder mehr Qualitätsklassen bewertet. Das Ablesen der Meßwerte erfolgt sowohl bei der Messung der Bogenabmessungen wie auch bei der Bestimmung der Kantenrauhigkeit mit dem menschlichen Auge und unterliegt daher subjektiven Einflüssen. Da die Prüfergebnisse aber der Kontrolle der Produktion und als Grundlage für vorzunehmende Korrekturen dienen, sind zuverlässige und möglichst objektive Messungen der Qualitätsmerkmale erforderlich. Das erfordert für die Durchführung der Messungen ausgebildetes und erfahrenes Personal.

Es ist daher wünschenswert, diese Qualitätsparameter während der Produktion möglichst oft, möglichst exakt und möglichst objektiv ohne subjektive Einflüsse zu erfassen, um die Produktionsmaschine mit optimalen Einstellungen und in dem für die gewünschte Bogenqualität erforderlichen Wartungszustand betreiben zu können.

Der Erfindung liegt somit die Aufgabe zugrunde, eine Vorrichtung der eingangs beschriebenen Art anzugeben, die eine selbsttätige und objektive Bestimmung ausgewählter Qualitätsmerkmale von Formatpapieren ermöglicht.

Gelöst wird diese Aufgabe erfindungsgemäß durch eine Vorrichtung mit den kennzeichnenden Merkmalen des Anspruchs 1. Damit ergibt sich gemäß der Erfindung eine Meßmaschine, welche die zu prüfenden Bögen automatisch zuführt, in der Meßposition positioniert und nach dem Messen automatisch auswirft. Der Meßvorgang wird so von manueller Betätigung weitgehend unabhängig, so daß eine rasche Aufeinanderfolge von Messungen möglich wird. Damit wird die Kontrolle der Qualitätsmerkmale der produzierten Bögen optimiert, was eine schnellere Reaktion auf möglicherweise auftretende Fehler in der Maschine erlaubt.

Die Unteransprüche enthalten Merkmale von Fortbildungen und vorteilhaften Ausgestaltungen der Vorrichtung nach der Erfindung.

Gemäß Anspruch 2 werden die zu prüfenden Bögen von einem Vorratsstapel abgenommen und der Meßstation zugeführt. Das macht die Meßmaschine von der Aufmerksamkeit des Bedienungspersonals weitgehend unabhängig. Die Ansprüche 3 und 4 betreffen die weitere Ausbildung der Zuführeinrichtung, wobei mit den Merkmalen des Anspruchs 3 eine zuverlässige Vereinzelung der zu prüfenden Bögen bewirkt wird, so daß immer auf einen einzelnen Bogen bezogene Meßergebnisse erwartet werden können. Die Merkmale des Anspruchs 4 stellen eine sehr einfache Anordnung zum Zuführen der Bögen in die Meßstation zur Verfügung. Anspruch 5 befaßt sich mit der Ausgestaltung der Meßstation, die mit einfachen Mitteln eine exakte Positionierung der Bögen in der Meßstation erlaubt. Anspruch 6 gibt als bevorzugtes Meßmittel eine CCD-Kamera mit einer angeschlossenen Auswertanordnung an, welche die Form wenigstens der rückwertigen Kante eines in der Meßstation positionierten Bogens und ihre Lage erfaßt und daraus objektive Informationen über die Größe des Bogens und die Schnittkantenrauhigkeit ableitet. Zur Anpassung der Meßeinrichtung an unterschiedliche Bogenformate ist die Kamera gemäß Anspruch 7 in Förderrichtung der Bögen hin und zurück verfahrbar. Das macht die Prüfeinrichtung sehr flexibel und formatunabhängig.

Die Ansprüche 8 bis 10 beziehen sich auf die Abwurfeinrichtung, mit der die Bögen nach der Messung aus der Meßstation entfernt und beispielsweise in einen Sammelkorb abgeworfen werden. Der einfache Aufbau dieser Abwurfeinrichtung erfordert wenig konstruktive und maschinelle Mittel und arbeitet dennoch zuverlässig und schnell, ohne die Bögen zu beschädigen. Die geprüften Bögen können daher nach ihrer Prüfung wieder in den Produktionsprozeß eingeschleust werden. Mit einer Steueranordnung gemäß Anspruch 11 werden das Vereinzelungsmittel zum Entnehmen von Bögen aus dem Vorratsstapel, das Übergabeorgan und/oder die Abwurfeinrichtung steuerungsmäßig miteinander verknüpft, so daß ihre Arbeitsweise exakt auf den zeitlichen Ablauf der Meßvorgänge abgestimmt ist. Damit ist eine optimale Ausnutzung der Meßkapazität der erfindungsgemäß vorgeschlagenen Meßvorrichtung möglich.

Die Erfindung bietet in vorteilhafter Weise die Möglichkeit, ausgewählte Qualitätsmerkmale von geschnittenen Formatpapierbögen selbsttätig, in rascher Aufeinanderfolge, objektiv und exakt zu erfassen und für die Produktion nutzbar zu machen. Aufgrund subjektiver Eindrücke einer die Qualität beurteilenden Person entstehende Fehler werden vermieden. Die Zuführung der zu prüfenden Bögen zur Meßstation und ihre Positionierung im Erfassungbereich der Meßeinrichtung erfolgen gesteuert entsprechend dem Arbeitsablauf der Meßeinrichtung. Damit ist sichergestellt, daß nacheinander möglichst viele Bögen geprüft werden, so daß mit der Maschine nach der Erfindung eine optimale Produktionskontrolle erfolgt. Dabei ist der maschinelle Aufwand für die Bogenhandhabung gering. Die Bögen werden mit größtmöglicher Schonung behandelt, so daß sie nach der Messung wieder in den Produktionsprozeß eingeschleust werden können. Zum Erfassen der Qualitätsmerkmale können verschiedene Aufnehmer- und Auswertungssysteme eingesetzt werden, so daß sich die Meßmaschine für die Erfassung der unterschiedlichsten Qualitätsmerkmale der hergestellten Bögen eignet.

Die Erfindung wird nun anhand der Zeichnung näher erläutert.

Es zeigen
- Figur 1: eine perspektivische Ansicht einer Meßmaschine nach der Erfindung und
- Figur 2: eine Seitenansicht einer Abwurfeinrichtung der Meßmaschine nach der Erfindung.

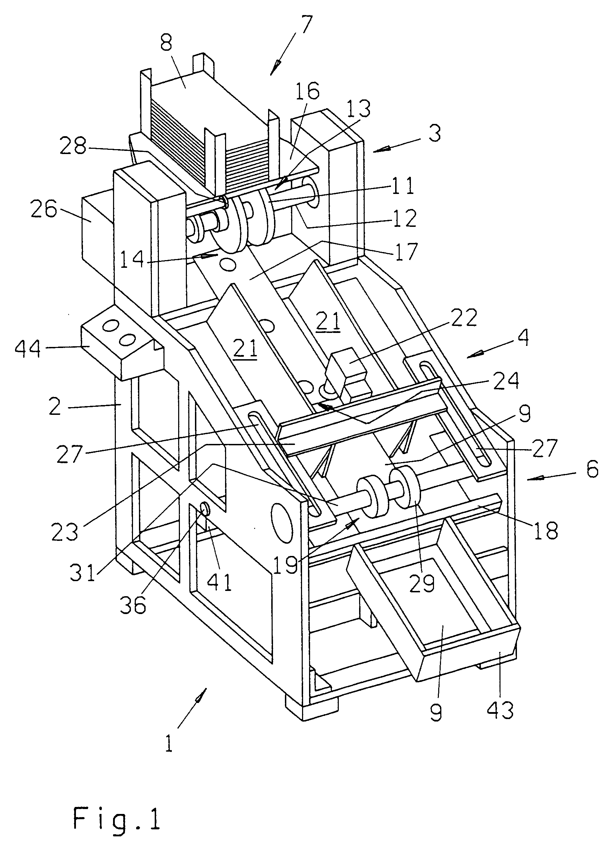

Die Meßvorrichtung nach der Erfindung ist in Figur 1 in einer perspektivischen Zeichnung dargestellt und insgesamt mit 1 bezeichnet. Die Meßvorrichtung 1 weist ein Gestell 2 auf, welches eine Zuführeinrichtung 3, eine Prüfeinrichtung 4 und eine Abwurfeinrichtung 6 trägt. Die Zuführeinrichtung 3 ist einer Vorratsstation 7 zugeordnet, die einen Stapel 8 aus zu prüfenden Bögen 9 bereithält. Sie weist ein Vereinzelungsmittel in Gestalt eines Transportwalzenpaares 11 auf, das an der Unterseite des Stapels um eine Achse 12 rotiert und von einem nicht dargestellten Motor angetrieben ist. Das Transportwalzenpaar 11 ergreift in seiner dem Vorratsstapel benachbarten Aufnahmeposition 13 jeweils den untersten Bogen des Stapels und fördert ihn in eine der Prüfeinrichtung 4 benachbarte Abgabeposition 14. Zum Erfassen des Bogens weisen die Transportwalzen 11 an ihrem Umfang in der Zeichnung nicht dargestellte, an sich bekannte Greifmittel wie mechanische Greifer oder Saugluftöffnungen auf. Als Vereinzelungsmittel ist hier beispielsweise ein Rotationssauganleger 16 des Typs RSA 450-G der Firma Pfannkuch Maschinen GmbH, Ahrensburg, Bundesrepublik Deutschland, geeignet. Um die Vereinzelung der Bögen bei der Entnahme vom Stapel 8 mittels der Transportscheiben 11 zu überwachen, sind der Aufnahmeposition 13 der Transportwalzen Kontrollorgane beispielsweise in Gestalt von Lichtschranken 28 zugeordnet. Auf diese Weise ist sichergestellt, daß der Prüfung nur tatsächlich vereinzelte Bögen unterzogen werden, so daß Ergebnisverfälschungen ausgeschlossen sind. Die Stapel 8 von zu prüfenden Bögen werden der Vorratsstation 7 von Zeit zu Zeit manuell aus der laufenden Produktion zugeführt. Um die Funktion der Prüfvorrichtung weiter zu automatisieren, können - was nicht dargestellt ist - die Stapel oder auch einzelne Bögen mit selbsttätig arbeitenden Entnahmemitteln aus der laufenden Produktion entnommen und der Prüfvorrichtung zugeführt werden.

Die Transportwalzen übergeben den separierten Bogen in der Abgabeposition 14 an eine die Abgabeposition mit der Prüfeinrichtung verbindende schräg nach unten geneigte Rampe 17 ab. Auf der Rampe gleitet der Bogen 9 gegen eine Anschlagleiste 18, die ihn in einer Meßstation 19 in Förderrichtung exakt positioniert. Seitliche Führungen 21 bewirken eine exakte Seitenpositionierung des zu prüfenden Bogens 9 in der Meßstation 19.

Der Meßstation 19 ist als Meßmittel eine Videokamera 22 zugeordnet, die an einer Querschiene 23 oberhalb der Meßstation 19 angebracht und auf die rückwertige Kante 24 des zu prüfenden Bogens 9 ausgerichtet ist. Auf diese Weise erfaßt die Kamera sowohl die Lage als auch die Form der Kante 24, die mittels einer einen Rechner enthaltenden Auswert- und Steueranordnung 26 zu entsprechenden Informationen bzw. Signalen über die Blattlänge und die Schnittkantenrauhigkeit verarbeitet werden können. Als Kamera kommt beispielsweise eine Schwarzweiß-CCD-Fernsehkamera in Frage, wie sie als Modell CF 4/1 von der Firma KAPPA Meßtechnik GmbH vertrieben wird.

Entsprechend dem Format des zu prüfenden Bogens 9 kann die Kamera durch Verschieben der Querschiene 23 in Förderrichtung eingestellt werden. Hierzu sind im Gestell 2 beidseits der Förderbahn der Bögen Längsschlitze 27 vorgesehen.

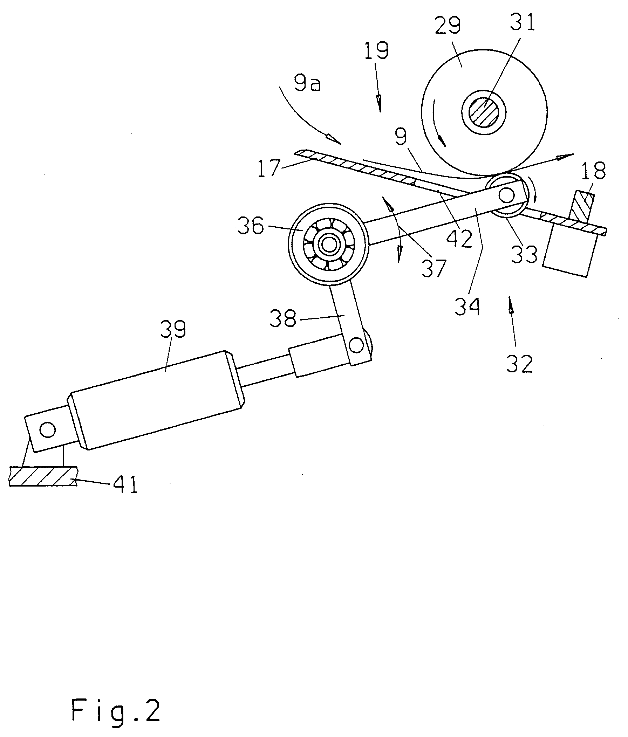

Um einen automatischen Ablauf des Meßvorgangs zu ermöglichen, ist der Meßstation die Abwurfeinrichtung 6 zugeordnet, deren Aufbau in Figur 2 dargestellt ist. Diese Abwurfeinrichtung weist auch in Figur 1 erkennbare Auswurfrollen 29 auf, die um eine oberhalb der Anschlagleiste 18 quer zur Förderrichtung der Bögen verlaufende Achse 31 rotieren und von einem nicht dargestellten Motor dauernd angetrieben sind. Ausserdem weist die Abwurfeinrichtung ein Übergabeorgan 32 in Gestalt einer Andruckrolle 33 auf. Die Andruckrolle ist an einem Winkelhebel 34 frei drehbar gelagert, der um eine gestellfeste Achse 36 in Richtung eines Doppelpfeiles 37 schwenkbar ist. An dem freien Arm 38 des Winkelhabels 34 greift ein Antriebsorgan, beispielsweise eine Kolbenzylindereinheit 39 an, die an einer Querstrebe 41 des Gestells 2 angelenkt ist.

Figur 2 zeigt außerdem einen Teil der schrägen Rampe 17, welcher die Unterlage der Meßstation 19 bildet. Diese Rampe 17 weist vor der die Meßstation in Förderrichtung begrenzenden Anschlagleiste 18 eine Durchlaßöffnung 42 auf, durch welche die Andruckrolle 33 in Richtung des Doppelpfeiles 37 hindurchtreten kann. Wird die Andruckrolle 33 mittels des Antriebes 39 nach oben geschwenkt, so hebt sie den in der Meßstation befindlichen Bogen 9 über die Anschlagleiste 18 hinweg und drückt ihn gegen die Auswurfrollen 29. Die Auswurfrollen sind dauernd angetrieben, 50 daß sie den Bogen 9 in Förderrichtung beschleunigen und in einen Auffangkorb 43 abwerfen. Nach dem Abwerfen des Bogens 9 wird die Andruckrolle 33 durch den Antrieb 39 zurückgeschwenkt, so daß ein neuer Bogen 9a in der Meßstation positioniert werden kann.

An einer Bedienungskonsole 44 kann in den Betrieb der Meßvorrichtung eingegriffen und auf die Meßergebnisse zugegriffen werden.

## Patentansprüche

1. Vorrichtung zum Bestimmen ausgewählter Qualitätsmerkmale, insbesondere der Länge, Breite und/oder der Schnittkantenrauhigkeit, von Bögen aus Papier oder ähnlichem Material, gekennzeichnet durch eine Prüfeinrichtung mit Meßmitteln (22,26) zum Erfassen der ausgewählten Eigenschaften wenigstens jeweils eines Bogens (9) und einer im Erfassungsbereich der Meßmittel liegenden Meßstation (19) zum Aufnehmen wenigstens eines zu prüfenden Bogens, eine Zuführeinrichtung (3) zum selbsttätigen Zuführen und Positionieren der Bögen in der Meßstation und eine Abwurfeinrichtung (6) zum Auswerfen der Bögen aus der Meßstation.

2. Vorrichtung nach Anspruch 1, dadurch gekennzeichnet, daß der Zuführeinricritung (3) eine Vorratsstation (7) zum Bereithalten eines Stapels (8) aus Bögen zugeordnet ist und daß die Zuführeinrichtung (3) Mittel (16) zum aufeinanderfolgenden Abnehmen einzelner Bögen vom Stapel (8) und zum Ablegen der Bögen in der Meßstation (19) aufweist.

3. Vorrichtung nach Anspruch 1 oder 2, dadurch gekennzeichnet, daß das Vereinzelungsmittel (16) einen Bogenförderer (11) aufweist, welcher in einer dem Vorratsstapel (8) benachbarten Aufnahmeposition (13) einen Bogen vom Vorratsstapel abnimmt, ihn in eine der Meßstation (19) benachbarte Abgabeposition (14) bewegt und ihn in der Abgabeposition zur Positionierung in der Meßstation abgibt.

4. Vorrichtung nach einem der Ansprüche 1 bis 3, dadurch gekennzeichnet, daß die Zuführeinrichtung (3) eine die Meßstation (19) mit der Abgabeposition (14) des Vereinzelungsmittels (11) verbindende geneigte Rampe (17) aufweist, auf welcher die Bögen (9) nacheinander von der Abgabeposition (14) in die Meßstation (19) gleiten.

5. Vorrichtung nach einem der Ansprüche 1 bis 4, dadurch gekennzeichnet, daß die Meßstation (19) als Mittel zum exakten Positionieren eines Bogens im Erfassungsbereich des Meßmittels (22) wenigstens ein in der Bewegungsbahn der Bögen (9) angeordnetes Anschlagelement (18) und quer zur Bewegungsrichtung der Bögen einstellbare Führungen (21) aufweist.

6. Vorrichtung nach einem der Ansprüche 1 bis 5, dadurch gekennzeichnet, daß die Prüfeinrichtung (1) als Meßmittel eine wenigstens die rückwärtige Kante (24) eines in der Meßstation (19) positionierten Bogens (9) und ihre Lage erfassende Kamera (22) und eine an die Kamera angeschlossene Auswertanordnung (26) aufweist.

7. Vorrichtung nach Anspruch 6, dadurch gekennzeichnet, daß die Kamera (22) in Förderrichtung der Bögen hin und zurückverfahrbar ist.

8. Vorrichtung nach einem der Ansprüche 1 bis 7, dadurch gekennzeichnet, daß die Abwurfeinrichtung (6) einen antreibbaren Abwurfförderer (29) und ein den in der Meßstation (19) positionierten Bogen (9) an den Abwurfförderer (29) übergebendes Übergabeorgan (33) aufweist.

9. Vorrichtung nach Anspruch 8, dadurch gekennzeichnet, daß der Abwurfförderer (29) als rotierend antreibbare Rolle ausgebildet ist, deren Achse (31) oberhalb des die Meßstation (19) in Förderrichtung der Bögen (9) begrenzenden Anschlagelements (18) quer zur Bewegungsrichtung der Bögen verläuft, und daß das Übergabeorgan (33) ein von unten durch die Meßstation (19) hindurch gegen den Abwurfförderer (29) bewegbares Andruckelement aufweist.

10. Vorrichtung nach Anspruch 8 oder 9, dadurch gekennzeichnet, daß das Übergabeorgan (32) als Andruckelement eine an einem nach oben schwenkbaren Hebel (34) frei drehbare Andruckrolle (33) aufweist, welche das vordere Ende des in der Meßstation (19) positionierten Bogens (9) über das Anschlagelement (18) hinaus anhebt und an den Abwurfförderer (29) anlegt.

11. Vorrichtung nach einem der Ansprüche 1 bis 10, dadurch gekennzeichnet, daß eine Steueranordnung (26) vorgesehen ist, welche das Vereinzelungsmittel (11), das Übergabeorgan (32) und/oder die Abwurfeinrichtung (6) in Abhängigkeit vom zeitlichen Ablauf der Meßvorgänge steuert.
